# EUROPÄISCHE PATENTSCHRIFT

(11) **EP 1 756 003 B1**
(45) Veröffentlichungstag und Bekanntmachung des Hinweises auf die Patenterteilung: **14.11.2007**
(21) Anmeldenummer: 05735023.3
(22) Anmeldetag: 21.04.2005
(51) Int. Cl.: C01B 31/02

(54) **VERFAHREN ZUR HERSTELLUNG VON SILANISIERTEN KOHLENSTOFF-NANORÖHREN**
METHOD FOR THE PRODUCTION OF SILANIZED CARBON NANOTUBES
PROCEDE POUR LA PRODUCTION DE NANOTUBES DE CARBONE SILANISES

(30) Priorität: 01.06.2004 DE 102004026576
(43) Veröffentlichungstag der Anmeldung: 28.02.2007
(73) Patentinhaber: Qimonda AG, 81739 München (DE)
(72) Erfinder: DÜSBERG, Georg, 81541 München (DE); LIEBAU, Maik, 01127 Dresden (DE); UNGER, Eugen, 86161 München (DE)
(74) Vertreter: Müller-Boré & Partner Patentanwälte
(86) Internationale Anmeldenummer: PCT/EP2005/004310
(87) Internationale Veröffentlichungsnummer: WO 2005/118472

(56) Entgegenhaltungen:
- WO-A-20/05012171
- US-B1- 6 203 814
- VELASCO-SANTOS C ET AL: "Chemical functionalization of carbon nanotubes through an organosilane" NANOTECHNOLOGY, INSTITUTE OF PHYSICS PUBLISHING, BRISTOL, GB, Bd. 13, Nr. 4, 3. Juli 2002 (2002-07-03), Seiten 495-498, XP002314113 ISSN: 0957-4484

## Beschreibung

Die vorliegende Erfindung betrifft silanisierte Kohlenstoff-Nanoröhren, ein Verfahren zur Herstellung derselben sowie die Verwendung silanisierter Kohlenstoff-Nanoröhren.

Im Stand der Technik ist ein Verfahren zum Herstellen von Kohlenstoff-Nanoröhren durch Aufwachsen auf einem Substrat bekannt (B.Q. Wei et al., Organized Assembly of Carbon Nanotubes, Nature, Volume 416, S. 495-496, 4. April 2002).

Im Stand der Technik ist ein weiteres Verfahren zum Herstellen von Kohlenstoff-Nanoröhren durch Abscheiden der Kohlenstoff-Nanoröhren aus der Gasphase beschrieben (Z. F. Ren et al, Synthesis of Large Arrays of Well-Aligned Carbon Nanotubes on Glass, SCIENCE, Volume 282. S. 1105 - 1107, November 1998).

Dem Fachmann sind Grundlagen über Kohlenstoff-Nanoröhren bekannt, beispielsweise aus C. Dekker, Carbon-Nanotubes as Molecular Quantum Wires, Physics Today, S. 22-28, Mai 1999.

Nanoröhren, insbesondere Kohlenstoff-Nanoröhren, eignen sich als metallische Leiter sowie als Halbleiter in der Nano-Elektronik. Darüber hinaus werden die Kohlenstoff-Nanoröhren beispielsweise als Kompositmaterialien, Sensoren oder Halbleiterelemente in Transistoren verwendet. In vielen Fällen ist jedoch eine physikalische und/oder chemische Oberflächenmodifikation der Nanoröhren Voraussetzung für deren Verwendung. Dazu zählt beispielsweise die Modifikation durch ein Dielektrikum für Transistoranwendungen. Hier wird das Dielektrikum, beispielsweise eine Silanschicht, als Isolator zwischen dem aktiven Pfad (Kohlenstoff-Nanoröhre) des Transistors und einer Gateelektrode eingesetzt.

Des Weiteren werden Dielektrika für Anwendungen als Intermetallverbindung benötigt, um die elektrisch leitenden Kohlenstoff-Nanoröhren gegenüber der Umgebung abzuschirmen. Die Veränderung der Benetzbarkeit der Oberfläche von Kohlenstoff-Nanoröhren ist außerdem für deren Anwendung in Kompositen und für die chemische Modifizierung bei Sensoranwendungen wichtig.

Die Beschichtung der Kohlenstoff-Nanoröhren mit SiOₓ erfolgt beispielsweise durch eine Gasphasenabscheidung (CVD) von SiO₂. Hierzu sind Plasmaverfahren oder/und Temperaturen über 300°C in einer oxidativen Atmosphäre erforderlich. In beiden Fällen können die Kohlenstoff-Nanoröhren zerstört werden.

Im Stand der Technik ist auch eine Beschichtung von Kohlenstoff-Nanoröhren mit SiOₓ durch eine Sol-Gel-Technik bei Raumtemperatur beschrieben (T. Seeger et al.; Chemical Physics Letters 339 (2001) Seite 41). Diese Beschichtungen haben den Nachteil, daß die Kohlenstoff-Nanoröhren nur in einer Art SiOₓ-Mantel eingebettet und nicht chemisch gebunden sind. Dieser Mantel kann sich durch thermische Spannungen von der Nanoröhre lösen.

US6203814 offenbart ein Verfahren zum Silanisieren von Kohlenstoff-Nanoröhren, wobei die Kohlenstoff-Nanoröhren zuerst oxidiert werden und danach in einer Lösung mit einem Organosilanderivat reagieren.

Der vorliegenden Erfindung liegt somit die Aufgabe zugrunde, Kohlenstoff-Nanoröhren bereitzustellen, die mit einem dielektrischen Material beschichtet sind, wobei sich diese Beschichtung auch bei erhöhten Temperaturen als stabil erweist. Der vorliegenden Erfindung liegt auch die Aufgabe zugrunde, ein Verfahren zur Herstellung von derartig beschichteten Kohlenstoff-Nanoröhren bereitzustellen.

Diese Aufgaben werden durch die in den Ansprüchen gekennzeichneten Ausführungsformen gelöst.

Erfindungsgemäß wird ein Verfahren zum Silanisieren von Kohlenstoff-Nanoröhren bereitgestellt, das dadurch gekennzeichnet ist, daß die Kohlenstoff-Nanoröhren zunächst oxidiert werden und anschließend einer gesättigten Gasphase, umfassend ein oder mehrere Organosilanderivate, die unter Siloxanbildung kovalente Bindungen mit der Kohlenstoff-Nanoröhre ausbilden, ausgesetzt werden.

Überraschenderweise bilden die rezeugten Siloxane homogene, nahezu defektfreie Überzüge auf den Kohlenstoff-Nanoröhren.

Im Rahmen dieser Erfindung wird unter Kohlenstoff-Nanoröhre jede Art von Nanoröhre verstanden, die unter anderem ein- oder mehrwandig, dotiert oder funktionalisiert sein kann. Im Rahmen dieser Erfindung wird unter Silanisieren die Herstellung von Mono- oder Multischichten von Organosilanen auf der Oberfläche der Kohlenstoff-Nanoröhren verstanden.

Die Organosilanderivate bilden dabei je nach Art des Derivats unter Siloxanbildung entweder an der Kohlenstoff-Nanoröhre (R₃SiX-Derivate), an der Kohlenstoff-Nanoröhre und an einen Nachbarn (R₂SiX₂-Derivate) oder an der Kohlenstoff-Nanoröhre und vernetzt untereinander (RSiX₃-Derivate) kovalente Bindungen aus. Werden nicht die reinen Derivate eingesetzt, sondern Gemische davon, zeigt sich, entsprechend der Zusammensetzung des Gemisches, eine komplexe Vernetzung. Vorzugsweise werden RSiX₃-Silanderivate eingesetzt.

Bevorzugte Organosilanderivate sind Alkyl- oder Arylsilanderivate der Form RSiX₃, R₂SiX₂ oder R₃SiX, wobei X eine funktionelle Gruppe bezeichnet. Bevorzugt sind auch Gemische aus zwei oder drei dieser Organosilanderivate. Bevorzugte funktionelle Gruppen X sind Chlorid, Bromid, Alkoxygruppen mit geradkettigen oder verzweigten C₁-C₃₀-Resten, Phenoxy, Benzyloxy oder Naphthoxy.

R bezeichnet unabhängig voneinander jeweils einen organischen Rest. Bevorzugte Reste sind Alkyl-, Aryl-, Alkenyl-, Alkeinyl-, Amino- und Hydroxylgruppen, wobei Alkyl- und Arylgruppen besonders bevorzugt sind.

Als Alkylgruppen werden insbesondere geradkettige oder verzweigte C₁-C₃₀-Gruppen oder (C₃-C₇)-Cycloalkylgruppen eingesetzt. Als Arylgruppen werden insbesondere Phenyl, Benzyl, Naphthyl, Phenanthryl oder Pyridyl, die jeweils mit ein, zwei oder drei Substituenten, unabhängig voneinander ausgewählt aus der Gruppe, bestehend aus einem geradkettigen oder verzweigtkettigen (C₁-C₆)-Alkylrest, einem (C₃-C₇)-Cycloalkylrest, einem geradkettigen oder verzweigtkettigen (C₁-C₆)-Alkoxyrest, Hydroxy, Amino, Di(C₁-C₆)alkylamino, Nitro und Cyan, substituiert sein können, ausgewählt. Als Alkenylgruppe kann beispielsweise Vinyl oder Propenyl eingesetzt werden. Als Alkinylgruppe kann beispielsweise Ethinyl verwendet werden.

Verbindungen der Form R₃Si-NH-SiR₃ (Disilazane) können ebenfalls zur Beschichtung der Kohlenstoff-Nanoröhren eingesetzt werden. Auch in dieser Ausführungsform bezeichnet R einen wie vorstehend definierten organischen Rest. Bevorzugte Reste sind dann Methyl-, Chlormethyl-, Phenyl-, Vinyl- und Aminogruppen oder cyclische Trisilazane wie beispielsweise Hexamethylcyclotrisilazan.

Erfindungsgemäß werden zunächst oxidierte Kohlenstoff-Nanoröhren bereitgestellt. Die Oxidation der Kohlenstoff-Nanoröhren erfolgt mittels Sauerstoff oder jedem anderen geeigneten Oxidationsmittel in Lösung oder in der Gasphase. Beispielsweise erfolgt die Oxidation in Lösung unter Verwendung von Hypochlorit oder in der Gasphase bei Temperaturen von über 500°C.

Der Oxidationsgrad, d.h. die Anzahl der oxidierten Gruppen pro Fläche wird üblicherweise gering gehalten. Die Oxidation wird typischerweise derart durchgeführt, daß der Oxidationsgrad der oxidierten Kohlenstoff-Nanoröhren im Bereich von 0,2 bis 1,0 Hydroxylgruppen pro Quadratnanometer liegt. Typischerweise liegt der Oxidationsgrad bei 0,5 Hydroxylgruppen pro Quadratnanometer.

Anschließend werden die derart funktionalisierten Kohlenstoff-Nanoröhren in einem Lösungsmittel wie beispielsweise Dimethlyformamid dispergiert und auf eine geeignete Substratoberfläche aufgetragen. In einem bevorzugten Verfahren werden die Kohlenstoff-Nanoröhren direkt auf dem Substrat gewachsen und in der Gasphase oxidiert.

Die anschließende Silanisierung der Kohlenstoff-Nanoröhren erfolgt in einer mit gasförmigen Organosilanderivaten (Dampfphase einer Lösung des Silans in einem aprotischen Lösungsmittel) gesättigten Inertgasatmosphäre. Bevorzugtes Inertgas ist Stickstoff. Als aprotische Lösungsmittel kommen beispielsweise Toluol, Pentan, Hexan, Petrolether und Cyclohexan aber auch Dimethylformamid oder Dimethylsulfoxid in Frage. Toluol ist als Lösungsmittel besonders geeignet.

Die Reaktionsbedingungen wie Reaktionsdauer, Reaktionstemperatur und Konzentration des Organosilanderivats werden in Abhängigkeit des Reaktionsprodukts gewählt und sind durch einfache Versuche dem Fachmann zugänglich. Üblicherweise erfolgt die Silanisierung bei einer Temperatur im Bereich von 15°C bis 130°C, vorzugsweise 20°C bis 100°C, für eine Zeitdauer von 1 min bis 24 h, wobei die Startreaktion, d.h. die Bindung der Silane an die Kohlenstoff-Nanoröhren, innerhalb von Minuten beendet ist. Die gewählte Temperatur ist im wesentlichen vom verwendeten Lösungsmittel bzw. dessen Dampfdruck abhängig. Üblicherweise wird ein aprotisches Lösungsmittel wie z.B. Toluol [welche LM können hier noch explizit genannt werden] verwendet, das einen Dampfdruck im Bereich von 0,01 bar bis 5 bar, bezogen auf Raumtemperatur, zeigt. Die Konzentration des Organosilans im Lösungsmittel beträgt typischerweise 1 mM.

Für eine Erhöhung der resultierenden Schichtdicke kann beispielsweise die Reaktionsatmosphäre verändert werden. Schon Spuren von Feuchte genügen, um Derivate der Form R₂SiX₂ oder RSiX₃ zu vernetzen. Diese Quervernetzung kann gezielt gesteuert werden, um kovalent gebundene Oxidumhüllungen mit einer Dicke von 0,01 µm bis 10 µm, vorzugsweise 0,01 µm bis 1 µm, zu erzeugen.

Während der Adsorption reagieren die funktionellen Gruppen X mit den auf den Kohlenstoff-Nanoröhren vorliegenden HydroxyGruppen. Im Ergebnis wird eine Monoschicht erhalten. Eine Erhöhung der Schichtdicke wird durch die Reaktion ungebundener funktioneller Gruppen X in Anwesenheit von Wasser erreicht. Diese Quervernetzung findet nicht bei Derivaten der Form R₃SiX statt, weil hier nach Reaktion mit der funktionellen Gruppe X keine weitere funktionelle Gruppe X zur Verfügung steht. Die Derivate der Form R₂SiX₂ und RSiX₃ binden sowohl an der Kohlenstoff-Nanoröhre als auch untereinander kovalent unter Siloxanbildung.

Eine bevorzugte Ausführungsform der vorliegenden Erfindung wird durch das folgende Beispiel näher erläutert, ohne darauf beschränkt zu sein.

### Beispiel

Zunächst werden Kohlenstoff-Nanoröhren durch katalytische Gasphasenabscheidung bei 600°C gewachsen. Die so erhaltenen mehrwandigen Kohlenstoff-Nanoröhren werden anschließend bei 700°C an Luft oxidiert. Die Oxidation erfolgt über einen Zeitraum von 1 min. Schließlich werden die Kohlenstoff-Nanoröhren in Dimethylformamid dispergiert und dann auf ein Substrat, wie beispielsweise Silizium, aufgetragen.

Das mit Kohlenstoff-Nanoröhren beschichtete Substrat wird einem Gasgemisch, bestehend aus Stickstoff als Inertgas und der Dampfphase einer 1 mmol Lösung von Octadecyltrichlorsilan in Toluol (Dampfdruck: 0,2 bar (25 °C)), ausgesetzt.

Das Silanisieren der Kohlenstoff-Nanoröhren findet bei Raumtemperatur über einen Zeitraum von 12 Stunden statt. Anschließend wird das mit den Kohlenstoff-Nanoröhren beschichtete Substrat aus der Silan-Dampfphase entfernt und noch 5 min in reinem Stickstoff belassen.

Es wird eine homogene Beschichtung der Kohlenstoff-Nanoröhren erhalten. Diese Beschichtung bzw. Umhüllung kann im Rasterelektronenmikroskop anhand der veränderten Durchmesser (+ ca. 10%) der untersuchten Kohlenstoff-Nanoröhren festgestellt werden.

## Patentansprüche

1. Verfahren zum Silanisieren von Kohlenstoff-Nanoröhren, wobei die Kohlenstoff-Nanoröhren zunächst oxidiert werden und anschließend einer gesättigten Gasphase, umfassend ein oder mehrere Organosilanderivate, die unter Siloxanbildung kovalente Bindungen mit der Kohlenstoff-Nanoröhre ausbilden, ausgesetzt werden.

2. Verfahren gemäß Anspruch 1, wobei die Silanisierung durch Aussetzen der oxidierten Kohlenstoff-Nanoröhren einem Gasgemisch, umfassend ein Inertgas und die Dampfphase einer Lösung von einem oder mehreren Organosilanderivaten in einem aprotischen Lösungsmittel, erfolgt.

3. Verfahren gemäß Anspruch 1 oder 2, wobei Organosilanderivate der allgemeinen Formeln RSiX₃, R₂SiX₂ oder R₃SiX oder Gemische aus zwei oder drei dieser Organosilanderivate eingesetzt werden, wobei X für eine funktionelle Gruppe, ausgewählt aus Chlorid, Bromid, Alkoxygruppen mit geradkettigen oder verzweigten C₁-C₃₀-Resten, Phenoxy, Benzyloxy oder Naphthoxy, steht und R unabhängig voneinander jeweils einen organischen Rest, ausgewählt aus Alkyl-, Aryl-, Alkenyl-, Alkinyl-, Amino- und Hydroxylgruppen, bezeichnet.

4. Verfahren gemäß einem der Ansprüche 1 bis 3, wobei die Silanisierung bei einer Temperatur im Bereich von 15°C bis 130°C, vorzugsweise 20°C bis 100°C, für eine Zeitdauer von 1 min bis 24 h durchgeführt wird.

5. Verfahren gemäß einem der Ansprüche 1 bis 4, wobei die Oxidation derart erfolgt, daß der Oxidationsgrad der oxidierten Kohlenstoff-Nanoröhren im Bereich von 0,2 bis 1,0 Hydroxylgruppen pro Quadratnanometer liegt.

6. Verfahren gemäß einem der Ansprüche 1 bis 5, wobei die Kohlenstoff-Nanoröhren direkt auf einem Substrat gewachsen und in der Gasphase oxidiert werden.

## Claims

1. Process for silanizing carbon nanotubes, wherein the carbon nanotubes are firstly oxidized and subsequently exposed to a saturated gas phase comprising one or more organosilane derivatives which form covalent bonds to the carbon nanotubes with siloxane formation.

2. Process according to Claim 1, wherein the silanization is carried out by exposing the oxidized carbon nanotubes to a gas mixture comprising an inert gas and the vapor phase of a solution of one or more organosilane derivatives in an aprotic solvent.

3. Process according to Claim 1 or 2, wherein organosilane derivatives of the general formula RSiX₃, R₂SiX₂ or R₃SiX or mixtures of two or three of these organosilane derivatives are used, where X is a functional group selected from among chloride, bromide, alkoxy groups having straight-chain or branched C₁-C₃₀ radicals, phenoxy, benzyloxy and naphthoxy and the radicals R are each, independently of one another, an organic radical selected from among alkyl, aryl, alkenyl, alkynyl, amino and hydroxyl groups.

4. Process according to any of Claims 1 to 3, wherein the silanization is carried out at a temperature in the range from 15°C to 130°C, preferably from 20°C to 100°C, for a time of from 1 minute to 24 hours.

5. Process according to any of Claims 1 to 4, wherein the oxidation is carried out so that the degree of oxidation of the oxidized carbon nanotubes is in the range from 0.2 to 1.0 hydroxyl group per square nanometer.

6. Process according to any of Claims 1 to 5, wherein the carbon nanotubes are grown directly on a substrate and are oxidized in the gas phase.

## Revendications

1. Procédé de silanisation de nanotubes de carbone, dans lequel les nanotubes de carbone sont d'abord oxydés et sont exposés ensuite à une phase gazeuse saturée, comprenant un ou plusieurs dérivés d'organosilane qui forment des liaisons covalentes avec les nanotubes de carbone, avec formation de siloxane.

2. Procédé suivant la revendication 1, dans lequel la silanisation se fait par exposition des nanotubes de carbone oxydés à un mélange gazeux comprenant un gaz inerte et la phase vapeur d'une solution d'un ou plusieurs dérivés d'organosilane dans un solvant aprotique.

3. Procédé suivant la revendication 1 ou 2, dans lequel on met en oeuvre des dérivés d'organosilane des formules générales RSiX₃, R₂SiX₂ ou R₃SiX ou des mélanges de deux ou trois de ces dérivés d'organosilane, où X représente un groupe fonctionnel choisi parmi un chlorure, un bromure, des groupes alcoxy avec des restes linéaires ou ramifiés en C₁ à C₃₀, un phénoxy, un benzyloxy ou un naphtoxy, et les R représentent à chaque fois indépendamment les uns des autres un reste organique choisi parmi des groupes alkyle, aryle, alcényle, alcynyle, amino et hydroxyle.

4. Procédé suivant l'une quelconque des revendications 1 à 3, dans lequel la silanisation est entreprise à une température de l'ordre de 15°C à 130°C, de préférence de 20°C à 100°C, pendant une durée de 1 minute à 24 h.

5. Procédé suivant l'une quelconque des revendications 1 à 4, dans lequel l'oxydation se fait de manière que le degré d'oxydation des nanotubes de carbone oxydés soit de l'ordre de 0,2 à 1,0 groupe hydroxyle par nanomètre carré.

6. Procédé suivant l'une quelconque des revendications 1 à 5, dans lequel les nanotubes de carbone croissent directement sur un substrat et son oxydés dans la phase gazeuse.
